# EUROPEAN PATENT APPLICATION

(11) **EP 4 711 855 A1**
(43) Date of publication of application: **18.03.2026**
(21) Application number: 25161736.1
(22) Date of filing: 05.03.2025
(51) Int. Cl.: G03G 15/00

(54) **MEDIUM PROCESSING APPARATUS AND IMAGE FORMING APPARATUS**

(30) Priority: 17.09.2024 JP 2024160122
(71) Applicant: Fujifilm Business Innovation Corp., Tokyo 107-0052 (JP)
(72) Inventor: SAITO, Shota, Yokohama (JP); UCHIYAMA, Takayuki, Ebina (JP); KODA, Kazuyuki, Yokohama (JP); ITO, Akira, Ebina (JP); SHIBUYA, Jun, Ebina (JP); KAYASHIMA, Hideki, Ebina (JP); UEGANE, Takumi, Ebina (JP); MAKITA, Takuya, Ebina (JP); SUZUKI, Masatoshi, Ebina (JP); KIYOMASA, Taku, Ebina (JP)
(74) Representative: Meissner Bolte Partnerschaft mbB

(57) **Abstract**

A medium processing apparatus (U4) includes a stapling device (9A) that binds media with staples; a stapleless binding device (9B) that binds media without the staples; a guide member (22) that guides the stapling device and the stapleless binding device in a width direction of the media; and a frame (63) disposed at a first end portion of the guide member in the width direction, the frame being positioned inward from an outer edge (66) of the stapleless binding device in a width direction of the stapleless binding device when the stapleless binding device is moved to the first end portion of the guide member.

## Description

### Background

### (i) Technical Field

The present disclosure relates to a medium processing apparatus and an image forming apparatus including a medium processing apparatus.

### (ii) Related Art

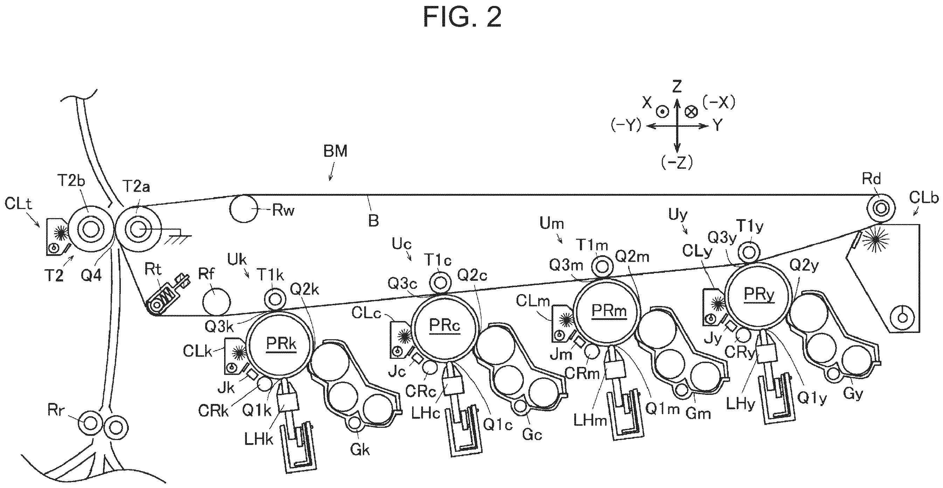

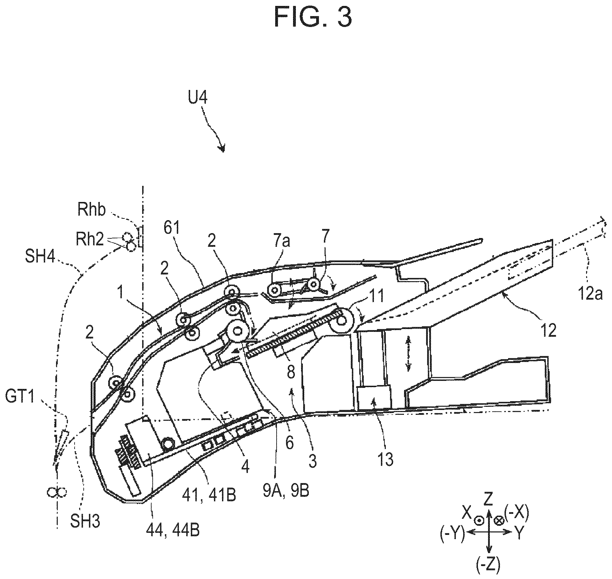

Technologies relating to binding devices that bind a stack of media on which images are recorded by an image recording device, generally referred to as stapler devices, are described in Japanese Unexamined Patent Application Publication No. 2024-91446 ([0043] to [0051], and Fig. 2 to Fig. 7), No. 2024-105569 ([0025], [0037], [0039], [0045] to [0065], Fig. 3, and Fig. 15 to Fig. 17), and No. 2022-125834 (Fig. 2, Fig. 4 to Fig. 7, and Fig. 13) to be publicly known.

Japanese Unexamined Patent Application Publication No. 2024-91446 describes a sheet processing device (B) including a staple unit (17) that is movable forward and rearward. The sheet processing device (B) in Japanese Unexamined Patent Application Publication No. 2024-91446 has a stapleless binding unit (27) at a front end portion. The sheet processing device (B) in Japanese Unexamined Patent Application Publication No. 2024-91446 is capable of aligning the discharged sheets and automatically binding the sheets with the staple unit (17) using staples. Alternatively, while allowing a user to manually insert a stack of sheets into the stapleless binding unit (27) and to position the sheets at the intended binding position, the sheet processing device (B) may allow the user to operate the stapleless binding unit (27) to manually bind the stack of sheets without using staples. Japanese Unexamined Patent Application Publication No. 2024-91446 is capable of receiving a staple refill while the staple unit (17) is in a cartridge replacement position. In the cartridge replacement position, the staple unit (17) protrudes forward beyond a front metal plate (30f) through a front opening (31f).

Japanese Unexamined Patent Application Publication No. 2024-105569 describes a sheet processing device that binds a rear corner with a staple unit (17), and binds a front corner with a stapleless binding unit (27). The staple unit (17) and the stapleless binding unit (27) are disposed between a front metal plate (30f) and a rear metal plate (30r). The staple unit (17) receives a staple refill while being moved to the rear of the rear metal plate (30r) through a rear opening (31r).

Japanese Unexamined Patent Application Publication No. 2022-125834 describes a structure including a stapling device (500) and a stapleless binding device (600) that move on a common guide rail (450). In Japanese Unexamined Patent Application Publication No. 2022-125834, the stapling device (500) and the stapleless binding device (600) retract into separate positions at the same end portion.

### Summary

Accordingly, it is an object of the present disclosure to provide a medium processing apparatus that allows a stapleless binding device and a stapling device to move on a guide member, and that has a smaller size than a medium processing apparatus that has a frame positioned outward from the position of a stapleless binding device moved to a first end portion of a guide member.

According to a first aspect of the present disclosure, there is provided a medium processing apparatus including a stapling device that binds media with staples; a stapleless binding device that binds media without the staples; a guide member that guides the stapling device and the stapleless binding device in a width direction of the media; and a frame disposed at a first end portion of the guide member in the width direction, the frame being positioned inward from an outer edge of the stapleless binding device in a width direction of the stapleless binding device when the stapleless binding device is moved to the first end portion of the guide member.

According to a second aspect of the present disclosure, there is provided a medium processing apparatus dependent on the first aspect,
wherein the frame includes a transit member that allows the stapleless binding device to extend therethrough.

According to a third aspect of the present disclosure, there is provided a medium processing apparatus dependent on the second aspect,
wherein the stapleless binding device is positioned in the transit member to extend through the transit member when the stapleless binding device moves to the first end portion of the guide member.

According to a fourth aspect of the present disclosure, there is provided a medium processing apparatus dependent on any one of the first to the third aspects, comprising:
an exterior member disposed outside the frame; and
a circuit board disposed in a space between the frame and the exterior member to control the medium processing apparatus.

According to a fifth aspect of the present disclosure, there is provided a medium processing apparatus dependent on any one of the first to the fourth aspects,
wherein the stapleless binding device is allowed to be fastened to or unfastened from the frame using a fastening member to be attachable to and removable from the frame.

According to a sixth aspect of the present disclosure, there is provided a medium processing apparatus dependent on the fifth aspect,
wherein the frame includes a to-be-fastened portion to which the stapleless binding device is fastened with the fastening member, the to-be-fastened portion having higher rigidity than other portions.

According to a seventh aspect of the present disclosure, there is provided a medium processing apparatus dependent on the sixth aspect,
wherein the to-be-fastened portion is formed from a component different from a body portion of the frame, is supported by the body portion, and is formed from a material with higher rigidity than a material of the body portion.

According to an eighth aspect of the present disclosure, there is provided a medium processing apparatus dependent on the sixth aspect,
wherein the to-be-fastened portion is thicker than the other portions.

According to a ninth aspect of the present disclosure, there is provided an image forming apparatus, comprising:
an image recording device that records an image on a medium; and
a medium processing apparatus according to any one of the first to the eighth aspects that performs postprocessing on the medium to which the image is recorded by the image recording device.

According to the first aspect and the ninth aspect of the present disclosure, the medium processing apparatus including a stapleless binding device and a stapling device that are movable on a guide member has a smaller size than a medium processing apparatus that has a frame positioned outward from the position of a stapleless binding device that is moved to a first end portion of a guide member.

According to the second aspect of the present disclosure, the stapleless binding device is allowed to pass through a transit member to have its outer edges in the width direction positioned outward beyond the frame.

According to the third aspect of the present disclosure, the medium processing apparatus has a smaller size than a medium processing apparatus in which the stapleless binding device does not pass through a transit member when the stapleless binding device is moved to the first end portion of the guide member.

According to the fourth aspect of the present disclosure, a space is effectively usable than a structure in which a circuit board is not disposed in a space between the frame positioned inward from the stapleless binding device and the exterior member.

According to the fifth aspect of the present disclosure, the stapleless binding device sustains less damage than a stapleless binding device that is not fastened to the frame with the fastening member.

According to the sixth aspect of the present disclosure, the stapleless binding device sustains less damage than a structure in which a to-be-fastened portion has rigidity not higher than other portions.

According to the seventh aspect of the present disclosure, a portion to which the stapleless binding device is fastened has rigidity easily enhanced than in a structure in which the to-be-fastened portion is not formed from a material with higher rigidity than a body of the frame and not formed from a component different from the body of the frame.

According to the eighth aspect of the present disclosure, the to-be-fastened portion has a higher thickness than other portions to have higher rigidity.

### Brief Description of the Drawings

Exemplary embodiments of the present disclosure will be described in detail based on the following figures, wherein:
Fig. 1 illustrates the entirety of an image forming apparatus according to a first example;
Fig. 2 is a diagram of a related portion of an image recording portion according to the first example;
Fig. 3 is a side view of a related portion of a medium processing apparatus according to a first example;
Fig. 4 is a plan view of a related portion of the medium processing apparatus according to the first example;
Fig. 5 is a diagram of a binding device according to the first example;
Fig. 6 is a diagram of the position of the binding device according to the first example;
Fig. 7 is an external view of the medium processing apparatus according to the first example;
Fig. 8 is a diagram of a frame portion of the medium processing apparatus according to the first example; and
Figs. 9A to 9C are diagrams of a rear frame according to the first example, where Fig. 9A is a perspective view of the rear frame, Fig. 9B is a diagram of a first rear frame, and Fig. 9C is a diagram of a second rear frame.

### Detailed Description

With reference now to the drawings, examples serving as specific examples of exemplary embodiments of the present disclosure are described, but the present disclosure is not limited to the examples described below.

For easy understanding of the description below, throughout the drawings, an X-axis direction denotes the front-rear direction, a Y-axis direction denotes the lateral direction, and a Z-axis direction denotes the vertical direction. The directions or sides indicated by arrows X, - X, Y, -Y, Z, and -Z are respectively referred to as forward, rearward, rightward, leftward, upward, and downward, or a front side, a rear side, a right side, a left side, an upper side, and a lower side.

Throughout the drawings, an encircled dot denotes an arrow directing from the back to the front of the sheet, and an encircled cross denotes an arrow directing from the front to the back of the sheet.

In the description with reference to the drawings, components other than those needed for the description are omitted as appropriate for ease of understanding.

### First Example

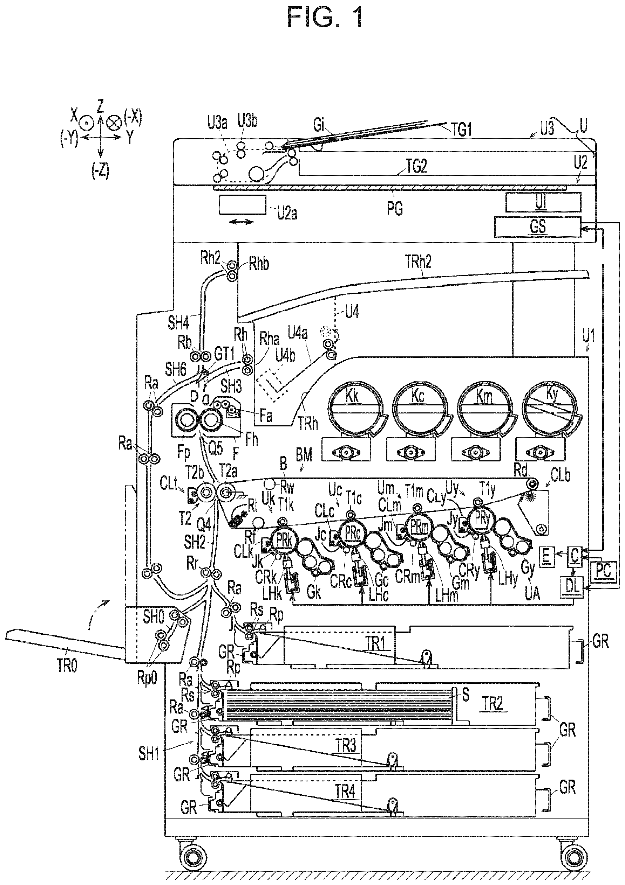

Fig. 1 illustrates the entirety of an image forming apparatus according to a first example.

In Fig. 1, a copying machine U serving as an example of the image forming apparatus according to the first example of the present disclosure includes a printer portion U1, serving as an example of an image recorder and an example of an image recording device. The printer portion U1 supports, at an upper portion, a scanner portion U2, serving as an example of a reading unit and an example of an image reading device. The scanner portion U2 supports, at an upper portion, an auto-feeder U3 serving as an example of a document transporting device.

At an upper portion of the auto-feeder U3, a document tray TG1, serving as an example of a medium container, is disposed. The document tray TG1 is capable of receiving a stack of multiple documents Gi that are to be copied. Below the document tray TG1, a document exit tray TG2 serving as an example of a document exit portion is disposed. Between the document tray TG1 and the document exit tray TG2, document transport rollers U3b are disposed along a document transport path U3a.

At the upper surface of the scanner portion U2, a platen glass PG serving as an example of a transparent document table is disposed. The scanner portion U2 according to the first example includes a reading unit U2a, which serves as an example of a reader and is disposed below the platen glass PG. The reading unit U2a according to the first example is supported to be movable in a lateral direction, serving as an example of a sub-scanning direction, along the lower surface of the platen glass PG. The reading unit U2a is electrically connected to an image processor GS.

Fig. 2 is a diagram of a related portion of an image recording portion according to the first example.

The image processor GS is electrically connected to a write circuit DL in the printer portion U1. The write circuit DL is electrically connected to light exposure devices LHy, LHm, LHc, and LHk serving as examples of latent image forming members.

The light exposure devices LHy to LHk according to the first example each include a light emitting diode (LED) head including multiple LEDs arranged in a main scanning direction. The light exposure devices LHy to LHk are capable of outputting write light beams corresponding to colors of yellow (Y), magenta (M), cyan (C), and black (K) in accordance with signals input from the write circuit DL.

The write circuit DL or a power source circuit E are controlled in terms of write timing or power supply timing in accordance with control signals from a controller C serving as an example of a control member.

In Fig. 1, above the light exposure devices LHy to LHk, photoconductors PRy, PRm, PRc, and PRk serving as examples of image carriers are disposed. In Fig. 1 and Fig. 2, the areas of the photoconductors PRy to PRk irradiated with write light constitute write areas Q1y, Q1m, Q1c, and Q1k.

Upstream from the write areas Q1y to Q1k in rotation directions of the photoconductors PRy to PRk, charging rollers CRy, CRm, CRc, and CRk serving as examples of chargers are respectively disposed. The charging rollers CRy to CRk according to the first example are supported to be rotatably driven while being in contact with the photoconductors PRy to PRk.

Downstream from the write areas Q1y to Q1k in the rotation directions of the photoconductors PRy to PRk, developing devices Gy, Gm, Gc, and Gk serving as examples of developing members are respectively disposed. Areas where the photoconductors PRy to PRk and the developing devices Gy to Gk respectively face one another constitute development areas Q2y, Q2m, Q2c, and Q2k.

Downstream from the developing devices Gy to Gk in the rotation directions of the photoconductors PRy to PRk, first transfer rollers T1y, T1m, T1c, and T1k serving as examples of first transfer members are respectively disposed. Areas where the photoconductors PRy to PRk and the first transfer rollers T1y to T1k respectively face one another constitute first transfer areas Q3y, Q3m, Q3c, and Q3k.

Downstream from the first transfer rollers T1y to T1k in the rotation directions of the photoconductors PRy to PRk, photoconductor cleaners CLy, CLm, CLc, and CLk serving as examples of cleaners are respectively disposed.

Downstream from the photoconductor cleaners CLy to CLk in the rotation directions of the photoconductors PRy to PRk, static eliminators Jy, Jm, Jc, and Jk serving as examples of static eliminating members or examples of static eliminating devices are respectively disposed.

The photoconductor PRy, the charging roller CRy, the light exposure device LHy, the developing device Gy, the first transfer roller T1y, the photoconductor cleaner CLy, and the static eliminator Jy for the color Y constitute an image forming portion Uy for the color Y serving as an example of a visible image forming member for the color Y according to the first example that forms toner images of the color Y. Similarly, each of the photoconductors PRm, PRc, and PRk, the corresponding one of the charging rollers CRm, CRc, and CRk, the corresponding one of the light exposure devices LHm, LHc, and LHk, the corresponding one of the developing devices Gm, Gc, and Gk, the corresponding one of the first transfer rollers T1m, T1c, and T1k, the corresponding one of the photoconductor cleaners CLm, CLc, and CLk, and the corresponding one of the static eliminators Jm, Jc, and Jk constitute an image forming portion Um, Uc, or Uk for the corresponding one of the colors M, C, and K.

Above the photoconductors PRy to PRk, a belt module BM serving as an example of an intermediate transfer device is disposed. The belt module BM includes an intermediate transfer belt B serving as an example of an image carrier and an example of an intermediate transfer member. The intermediate transfer belt B is formed from an endless belt.

The intermediate transfer belt B according to the first example is rotatably supported by a tension roller Rt serving as an example of a tensioner, a walking roller Rw serving as an example of an imbalance corrector, an idler roller Rf serving as an example of a driven member, a backup roller T2a serving as an example of an opposing member opposing a second transfer area, the first transfer rollers T1y to T1k, and a driving roller Rd serving as an example of a driving member. In the first example, when a driving force is transmitted to the driving roller Rd, the intermediate transfer belt B rotates.

At a position facing the backup roller T2a across the intermediate transfer belt B, a second transfer roller T2b serving as an example of a second transfer member is disposed. Components including the backup roller T2a and the second transfer roller T2b constitute a second transfer device T2 according to the first example serving as an example of a transfer device. The area where the second transfer roller T2b and the intermediate transfer belt B are in contact constitutes a second transfer area Q4.

Downstream from the second transfer area Q4 in the rotation direction of the intermediate transfer belt B, a belt cleaner CLb is disposed as an example of a cleaning device to clean the intermediate transfer body.

Components including the first transfer rollers T1y to T1k, the intermediate transfer belt B, and the second transfer device T2 constitute a transfer device T1+T2+B according to the first example serving as an example of a transfer member. The image forming portions Uy to Uk and the transfer device T1+T2+B constitute an image recording portion Uy-Uk+T1+T2+B according to the first example.

In Fig. 1, below the image forming portions Uy to Uk, four pairs of left and right guide rails GR serving as examples of guide members are disposed. On the guide rails GR, sheet feeding trays TR1, TR2, TR3, and TR4 serving as examples of medium containers are supported to be movable in and out in a front-rear direction. The sheet feeding trays TR1 to TR4 receive recording paper sheets S serving as examples of media.

At the upper left of each of the sheet feeding trays TR1 to TR4, a pickup roller Rp serving as an example of a pickup member is disposed. Downstream from the pickup roller Rp in the transport direction of the recording paper sheet S, separation rollers Rs serving as examples of separation members are disposed. Downstream from the separation rollers Rs in the transport direction of the recording paper sheet S, a sheet feeding path SH1 extending upward is disposed as an example of a medium transport path. Multiple transport rollers Ra serving as examples of transport members are disposed on the sheet feeding path SH1.

At a lower left of the copying machine U, a manual feed tray TR0 serving as an example of a medium container is disposed. At an upper right of the manual feed tray TR0, pickup rollers Rp0 are disposed, and a manual sheet feeding path SH0 extends. The manual sheet feeding path SH0 merges into the sheet feeding path SH1.

On the sheet feeding path SH1, upstream from the second transfer area Q4, registration rollers Rr serving as examples of adjusters of a transport timing are disposed. A transport path SH2 extends from the registration rollers Rr toward the second transfer area Q4.

Downstream from the second transfer area Q4 in the transport direction of the recording paper sheet S, a fixing device F serving as an example of a fixing member is disposed. The fixing device F includes a heating roller Fh serving as an example of a fixing member for heating, and a pressing roller Fp serving as an example of a fixing member for pressing. A contact area where the heating roller Fh and the pressing roller Fp are in contact constitutes a fixing area Q5.

At an upper surface of the printer portion U1, a lower paper exit tray TRh serving as an example of a medium exit portion is disposed. In the first example, at the lower paper exit tray TRh, a finisher U4 serving as an example of a medium processing apparatus is disposed. Above the fixing device F, a sheet exit path SH3 serving as an example of a transport path extends toward the lower paper exit tray TRh. At the downstream end of the sheet exit path SH3, discharging rollers Rh serving as examples of medium transporting members are disposed.

Above the lower paper exit tray TRh, an upper paper exit tray TRh2 serving as an example of a medium exit portion is disposed. Above the fixing device F, an upper transport path SH4 that diverges from the sheet exit path SH3 to extend toward the upper paper exit tray TRh2 is disposed.

On the upper transport path SH4, reverse rollers Rb serving as examples of medium transporting members rotatable forward and backward are disposed. Above a position where the sheet exit path SH3 and the upper transport path SH4 diverge, a reverse path SH6 serving as an example of a medium transport path diverges to the lower left from the upper transport path SH4.

A gate GT1 serving as an example of a switching member is disposed across a diverging portion at which the sheet exit path SH3 and the upper transport path SH4 diverge and a diverging portion at which the upper transport path SH4 and the reverse path SH6 diverge. The gate GT1 is supported to be switchable between a first guide position (a second position) to guide the recording paper sheet S from the fixing device F toward the lower paper exit tray TRh, and to guide the recording paper sheet S from the upper transport path SH4 to the reverse path SH6, and a second guide position (a first position) to guide the recording paper sheet S from the fixing device F toward the upper transport path SH4.

Multiple transport rollers Ra serving as examples of medium transport members are disposed on the reverse path SH6. The downstream end of the reverse path SH6 merges into the sheet feeding path SH1 upstream from the registration rollers Rr.

### Description of Image Forming Operation

When an operator manually places a document Gi on the platen glass PG to perform copying with the copying machine U according to the first example with the above structure, the reading unit U2a moves in the lateral direction from the initial position to scan the document Gi on the platen glass PG while exposing the document Gi with light. When the auto-feeder U3 is used to automatically transport documents Gi for photocopying, the multiple documents Gi received on the document tray TG1 are sequentially transported to and pass a document read position on the platen glass PG, and discharged to the document exit tray TG2. The documents Gi sequentially passing the read position on the platen glass PG are irradiated by the reading unit U2a with light to be scanned. Reflection light reflected off the documents Gi is received by the reading unit U2a. The reading unit U2a converts the received reflection light reflected off the documents Gi into electric signals. To perform both-side reading of the documents Gi, the documents Gi are also read by a reading sensor.

The image processor GS receives an input of electric signals output from the reading unit U2a. The image processor GS converts the electric signals of images of the colors R, G, and B read by the reading unit U2a into image information of yellow (Y), magenta (M), cyan (C), and black (K) for forming latent images. The image processor GS outputs the image information obtained after the conversion to the write circuit DL in the printer portion U1. To form a single-color image or a monochrome image as the image, the image processor GS outputs the image information of only black (K) to the write circuit DL.

The write circuit DL outputs control signals corresponding to the input image information to the light exposure devices LHy to LHk. The light exposure devices LHy to LHk output write light corresponding to the control signals.

Each of the photoconductors PRy to PRk is driven to rotate when the image formation is started. A charging voltage is applied to the charging rollers CRy to CRk from the power source circuit E. The surfaces of the photoconductors PRy to PRk are thus electrically charged by the charging rollers CRy to CRk. In the write areas Q1y to Q1k on the surfaces of the electrically charged photoconductors PRy to PRk, electrostatic latent images are formed by the light exposure devices LHy to LHk. The electrostatic latent images on the photoconductors PRy to PRk are developed into toner images, serving as examples of visible images, by the developing devices Gy to Gk in the development areas Q2y to Q2k.

The developed toner images are transported to the first transfer areas Q3y to Q3k at which the toner images come into contact with the intermediate transfer belt B, serving as an example of an intermediate transfer member. In the first transfer areas Q3y to Q3k, a first transfer voltage with a polarity opposite to the charging polarity of toner is applied from the power source circuit E to the first transfer rollers T1y to T1k. The toner images on the photoconductors PRy to PRk are thus transferred to the intermediate transfer belt B from the first transfer rollers T1y to T1k. To form a multi-color toner image, a toner image on the downstream side is transferred, in a superposed manner, onto a toner image that has been transferred to the intermediate transfer belt B in the upstream first transfer area.

Remnants or accretions on the photoconductors PRy to PRk that have undergone first transfer are removed by the photoconductor cleaners CLy to CLk. The surfaces of the cleaned photoconductors PRy to PRk undergo static elimination by the static eliminators Jy to Jk. The surfaces of the photoconductors PRy to PRk that have undergone static elimination are electrically charged again by the charging rollers CRy to CRk.

The single-color or multi-color toner image transferred onto the intermediate transfer belt B by the first transfer rollers T1y to T1k in the first transfer areas Q3y to Q3k is transported to the second transfer area Q4.

The recording paper sheet S on which an image is to be recorded is picked up by any of the pickup rollers Rp at the sheet feeding trays TR1 to TR4 to be used. When multiple recording paper sheets S are collectively picked up by the pickup roller Rp in a stacked manner, the multiple recording paper sheets S are separated one from another by the separation rollers Rs. The recording paper sheets S separated by the separation rollers Rs are transported by the transport rollers Ra along the sheet feeding path SH1. The recording paper sheets S transported along the sheet feeding path SH1 are transported to the registration rollers Rr. The recording paper sheets S loaded on the manual feed tray TR0 are also transported to the sheet feeding path SH1 through the manual sheet feeding path SH0 by the pickup rollers Rp0.

The registration rollers Rr transport the recording paper sheet S to the second transfer area Q4 at the timing when the toner image formed on the intermediate transfer belt B is transported to the second transfer area Q4. A second transfer voltage having a polarity opposite to the charging polarity of the toner is applied to the second transfer roller T2b by the power source circuit E. The toner image on the intermediate transfer belt B is thus transferred to the recording paper sheet S from the intermediate transfer belt B.

Accretions or other matter adhering to the surface of the intermediate transfer belt B that has undergone second transfer are removed by the belt cleaner CLb. The second transfer roller T2b is cleaned by a second transfer cleaner CLt serving as an example of a second transfer cleaner.

The recording paper sheet S to which the toner image is second transferred undergoes fixing with heat when passing the fixing area Q5.

When the recording paper sheet S to which an image is fixed is to undergo postprocessing, the recording paper sheet S is transported to the finisher U4, serving as an example of a medium processing apparatus, disposed at the lower paper exit tray TRh. When the recording paper sheet S is not to undergo postprocessing, the recording paper sheet S is transported to the upper paper exit tray TRh2. To transport the recording paper sheet S to the lower paper exit tray TRh, the gate GT1 moves to the first guide position. Thus, the recording paper sheet S fed from the fixing device F is transported along the sheet exit path SH3. The recording paper sheet S transported along the sheet exit path SH3 is transported by the discharging rollers Rh toward the finisher U4 and the lower paper exit tray TRh.

After performing a binding process, serving as an example of postprocessing, on the recording paper sheet S, the finisher U4 discharges the recording paper sheet S to the lower paper exit tray TRh.

To discharge the recording paper sheet S to the upper paper exit tray TRh2, the gate GT1 moves to the second guide position to discharge the recording paper sheet S to the upper paper exit tray TRh2. The recording paper sheet S is discharged by second paper discharging rollers Rh2 to the upper paper exit tray TRh2 through an upper paper exit port Rhb.

To perform two-side printing on the recording paper sheet S, the gate GT1 moves to the second guide position. When the trailing end of the recording paper sheet S passes the gate GT1, the gate GT1 moves to the first guide position, and the reverse roller Rb rotates in the reverse direction. Thus, the recording paper sheet S is guided by the gate GT1 to be transported to the reverse path SH6. The recording paper sheet S transported along the reverse path SH6 is transported to the registration rollers Rr while being turned upside down.

### Description of Finisher U4

Fig. 3 is a side view of a related portion of a medium processing apparatus according to a first example.

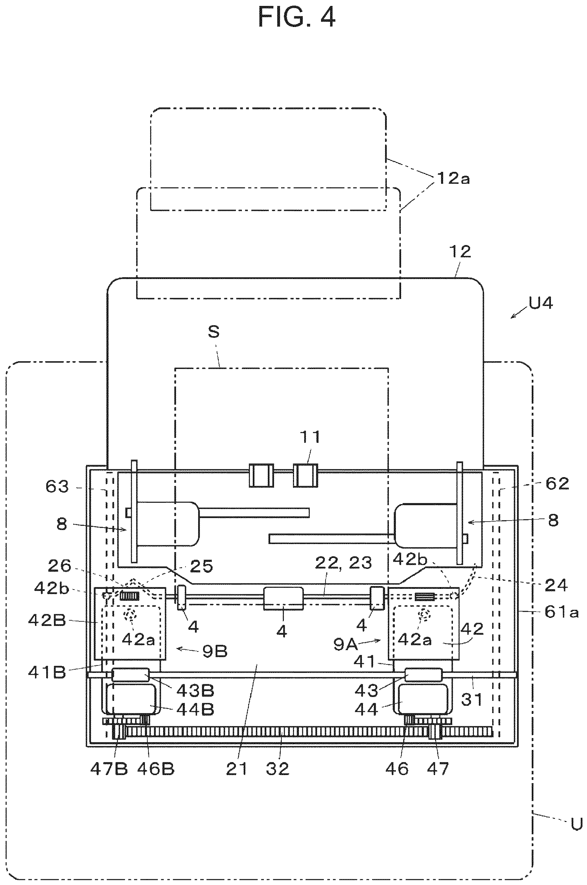

Fig. 4 is a plan view of a related portion of the medium processing apparatus according to the first example.

In Fig. 3, the finisher U4 according to the first example includes a connection path 1 connected to the sheet exit path SH3. On the connection path 1, transport rollers 2 serving as examples of transport members are disposed. Below a downstream end of the connection path 1, a compile tray 3 serving as an example of a first container is disposed. The compile tray 3 is inclined downward to the left.

At the left end of the compile tray 3, an end wall 4 serving as an example of an aligner is disposed. The ends of the recording paper sheets S in the transport direction abut on the end wall 4 to be aligned with one another.

Above the compile tray 3 and to the right of the end wall 4, a lead-in paddle 6 serving as an example of a first lead-in member is disposed. The lead-in paddle 6 comes into contact with the recording paper sheets S loaded on the compile tray 3, and transports the recording paper sheets S toward the end wall 4.

Above the right end portion of the compile tray 3, an up-and-down puddle 7 serving as an example of a second lead-in member is disposed. The up-and-down puddle 7 is capable of moving up and down in the vertical direction about a rotation shaft 7a. The up-and-down puddle 7 descends when the recording paper sheets S are discharged from the connection path 1 to the compile tray 3, and transports the recording paper sheets S toward the end wall 4. The up-and-down puddle 7 ascends before a subsequent recording paper sheet S is discharged from the connection path 1. More specifically, the up-and-down puddle 7 is controlled in terms of its ascent and descent not to block a delivery of the subsequent recording paper sheet S while moving the delivered recording paper sheets S toward the end wall 4.

In Fig. 4, on the upper surface of the compile tray 3, tampers 8 serving as aligning members are disposed. The tampers 8 are located at the front and the rear to form a pair, and are supported to be movable in the front-rear direction on the compile tray 3. When the tampers 8 move in the front-rear direction, the recording paper sheets S housed in the compile tray 3 are moved by the tampers 8 in the front-rear direction, that is, pushed by the tampers 8 in the sheet width direction. Thus, the recording paper sheets S are aligned in the width direction.

On the left of the end wall 4, a binding device 9 is disposed. The binding device 9 is capable of binding a stack of recording paper sheets S.

At the right end portion of the compile tray 3, stacker discharging rollers 11 serving as examples of discharging members are disposed. Above the stacker discharging rollers 11, an up-and-down roller, not illustrated, is disposed at a position misaligned with the up-and-down puddle 7 in the front-rear direction. To discharge a stack of the recording paper sheets S from the compile tray 3, the up-and-down roller descends to hold the stack of paper sheets together with the stacker discharging rollers 11, and discharges the stack of paper sheets.

On the right of the compile tray 3, a stacker tray 12 serving as an example of a second container is disposed. The stacker tray 12 receives a stack of the recording paper sheets S that have undergone postprocessing such as alignment or binding performed by the compile tray 3. The stacker tray 12 is supported by an elevating device 13 to be movable in the vertical direction. The elevating device 13 is controlled to descend in accordance with the load of a stack of sheets on the stacker tray 12. The stacker tray 12 supports a tray extension 12a serving as an extension member while allowing the tray extension 12a to be extended in a sheet transport direction. The tray extension 12a is manually extendable to receive a large-sized recording paper sheet S.

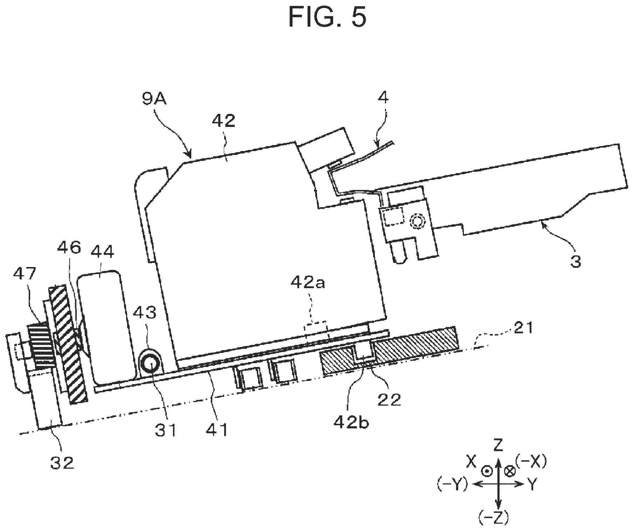

Fig. 5 is a diagram of a binding device according to the first example.

To the lower left of the compile tray 3 in Fig. 3 and Fig. 4, a support plate 21 serving as an example of a supporter of a binding device is disposed. At the right end portion of the support plate 21, a guide groove 22 serving as an example of a guide member is formed. The guide groove 22 has an edge binding guide portion 23 extending in the width direction of the recording paper sheet S. To the front end portion of the edge binding guide portion 23, a staple-involved corner-binding guide portion 24 serving as an example of a first corner binding guide member is connected. The staple-involved corner-binding guide portion 24 is bent rightward into an arc as it extends forward.

At the rear end portion of the edge binding guide portion 23, a stapleless corner binding guide portion 25 serving as an example of a second corner binding guide member, and a stapleless retraction guide portion 26 serving as an example of a retraction guide member are connected. The destination to which the stapleless corner binding guide portion 25 guides the media is switchable with various existing technologies such as a structure described in Japanese Unexamined Patent Application Publication No. 2024-101907, and is thus not described in detail.

Above a left portion of the support plate 21, a guide shaft 31 serving as an example of a cart guide member and extending in the front-rear direction is supported.

At the left end portion of the support plate 21, a rack 32 serving as an example of a gear member and extending in the front-rear direction is supported. The rack 32 has gear teeth on the upper surface.

In Fig. 4, the binding device 9 according to the first example includes a stapling device 9A and a stapleless binding device 9B.

In Fig. 4 and Fig. 5, the stapling device 9A includes a first cart 41 and a binding device body 42. The first cart 41 is supported to be movable on the support plate 21 in the front-rear direction. The first cart 41 has a first guidable portion 43 through which the guide shaft 31 extends. At the left end portion of the first cart 41, a first drive motor 44 serving as an example of a first driving source is supported. On an output shaft of the first drive motor 44, an output gear 46 serving as an example of a gear is supported. The rotations of the output gear 46 are transmitted to a pinion gear 47 via multiple gears. The pinion gear 47 engages with the rack 32. Thus, forward rotations, rearward rotations, and stops of the first drive motor 44 allow the first cart 41 to move in the front-rear direction.

When a motor not illustrated is operated, the binding device body 42 is capable of driving staples into a stack of the recording paper sheets S to bind the recording paper sheets S. The binding device body 42 is supported by the first cart 41 to be rotatable about a rotation shaft 42a. The binding device body 42 includes a guide protrusion 42b serving as an example of a guidable member. The guide protrusion 42b extends downward from the end portion of the binding device body 42 to fit into the guide groove 22.

With the movement of the first cart 41 in the front-rear direction, the guide protrusion 42b moves along the guide groove 22. While the guide protrusion 42b is guided by the edge binding guide portion 23, the binding device body 42 is capable of binding the recording paper sheets S with staples parallel to the width direction of the recording paper sheets S (capable of performing staple-involved edge binding). When the guide protrusion 42b approaches the staple-involved corner-binding guide portion 24, the binding device body 42 rotates about the rotation shaft 42a with respect to the first cart 41. Thus, the binding device body 42 is capable of diagonally driving a stable into corners of the recording paper sheets S to bind the recording paper sheets S (performing staple-involved corner binding).

The stapleless binding device 9B has the same components as the stapling device 9A except in that it uses a stapleless binding device body 42B that binds the recording paper sheets S without using staples, instead of the binding device body 42. Thus, the components of the stapleless binding device 9B are denoted with reference signs obtained by adding B to the reference signs 41 to 47 for the components of the stapling device 9A, without detailed description. In the first example, a stapleless binding method for binding the recording paper sheets S involves holding the recording paper sheets S in a thickness direction of the recording paper sheets S with a contact portion having protrusions and recesses, but the present disclosure is not limited to this example. A stapleless binding method may involve existing processes as appropriate, such as damaging portions of paper sheets, pressing the paper sheets in the thickness direction of the paper sheets to entangle fibers with one another, or deforming the paper sheets.

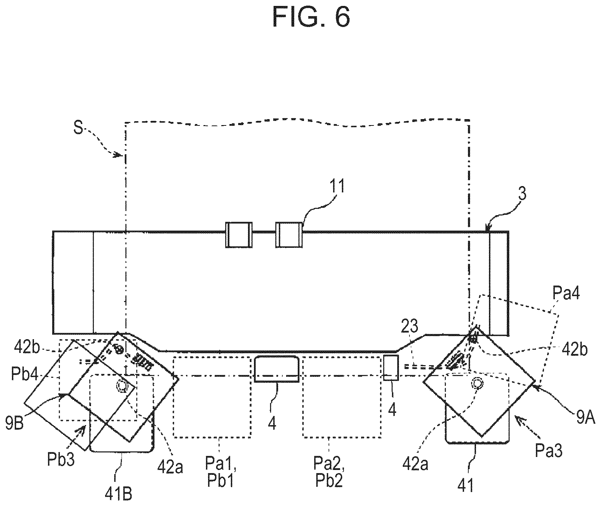

Fig. 6 is a diagram of the position of the binding device according to the first example.

In Fig. 6, the stapling device 9A moves to a first edge binding position Pa1, a second edge binding position Pa2, or a staple-involved corner binding position Pa3 in accordance with the portion to be bound selected by a user to perform binding. The stapleless binding device 9B moves to a first edge binding position Pb1, a second edge binding position Pb2, or a stapleless corner binding position Pb3 in accordance with the portion to be bound selected by a user to perform binding. In the first example, regardless of when stapling or stapleless binding is to be performed, the first edge binding positions Pa1 and Pb1 are set at the same position and the second edge binding positions Pa2 and Pb2 are set at the same position. Instead, different edge binding positions may be set between the stapling and stapleless binding. In the first example, the staple-involved corner binding position Pa3 is set in front of the finisher U4, and the stapleless corner binding position Pb3 is set at the rear of the finisher U4.

In the first example, the stapling device 9A is movable to a staple refill position Pa4 positioned further forward from the staple-involved corner binding position Pa3. The stapling device 9A moves to the staple refill position Pa4 for receiving a staple refill. In the first example, when the stapleless edge binding process is to be performed, the stapling device 9A retracts into the staple refill position Pa4 not to interfere with the stapleless binding device 9B. Instead of the staple refill position Pa4, the stapling device 9A may retract into the staple-involved corner binding position Pa3 or into a position between the staple-involved corner binding position Pa3 and the staple refill position Pa4.

In the first example, when the edge binding process is to be performed, the stapleless binding device 9B moves to the stapleless retraction position Pb4 near the rear end to retract, not to interfere with the stapling device 9A.

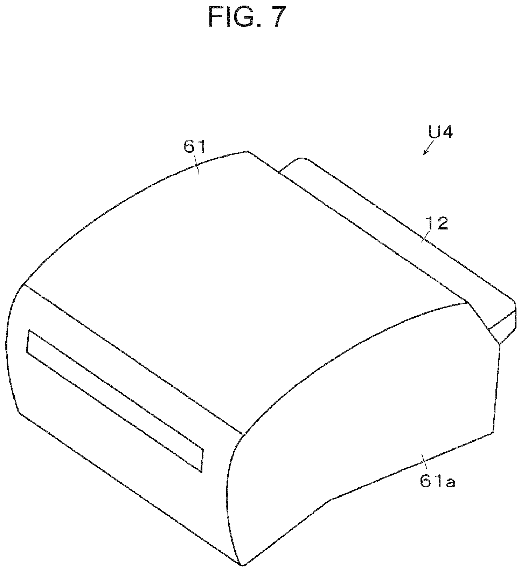

Fig. 7 is an external view of the medium processing apparatus according to the first example.

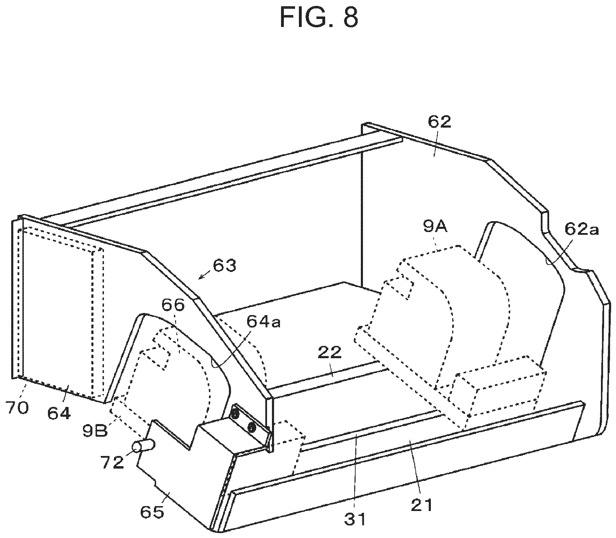

Fig. 8 is a diagram of a frame portion of the medium processing apparatus according to the first example.

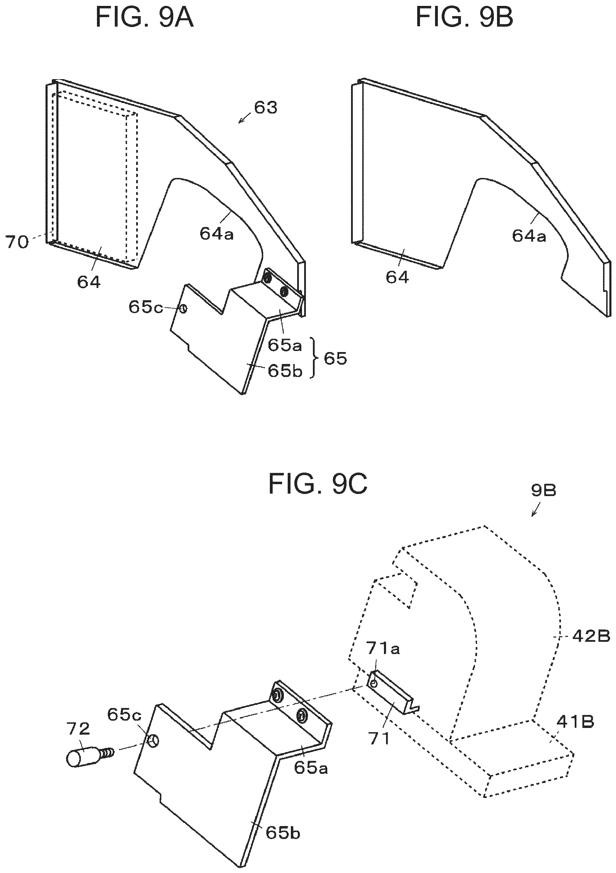

Figs. 9A to 9C are diagrams of a rear frame according to the first example, where Fig. 9A is a perspective view of the rear frame, Fig. 9B is a diagram of a first rear frame, and Fig. 9C is a diagram of a second rear frame.

In Fig. 7, in the finisher U4 according to the first example, the upper portion, the front portion, and the rear portion of each component such as the connection path 1 or the compile tray 3 are covered with an exterior covering 61 serving as an example of an exterior member. The upper surface of the exterior covering 61 is usable as the upper paper exit tray TRh2. A front portion 61a of the exterior covering 61 is openable. To refill the stapling device 9A with staples, a user is allowed to open the front portion 61a to access the stapling device 9A in the staple refill position Pa4.

In Fig. 7 and Fig. 8, on the inner side of the exterior covering 61, a front frame 62 and a rear frame 63 serving as examples of frames are disposed. On the inner sides of the front frame 62 and the rear frame 63, components such as the compile tray 3, the end wall 4, and the tampers 8 are disposed.

The front frame 62 is disposed at a front portion of the finisher U4. A lower portion of the front frame 62 is supported by the support plate 21. The front frame 62 has a front opening 62a serving as an example of a first transit member. The front opening 62a allows the binding device body 42 to extend therethrough. More specifically, when the stapling device 9A moves to the staple-involved corner binding position Pa3 or the staple refill position Pa4, and the binding device body 42 rotates, a portion (a left portion) of the binding device body 42 passes through the front opening 62a to protrude forward beyond the front opening 62a.

In Fig. 8 and Figs. 9A to 9C, the rear frame 63 is disposed at a rear portion of the finisher U4. A lower portion of the rear frame 63 is supported by the support plate 21. The rear frame 63 includes a rear frame body 64 serving as an example of a frame body portion, and a fastened plate 65 serving as an example of a to-be-fastened portion.

The rear frame body 64 has a rear opening 64a serving as an example of a second transit member. The rear opening 64a allows the stapleless binding device 9B to extend therethrough. When the stapleless binding device 9B moves to the stapleless corner binding position Pb3 or the stapleless retraction position Pb4, a part (rear portion) of the stapleless binding device 9B is allowed to pass through the rear opening 64a.

In the first example, when the stapleless binding device 9B moves to the stapleless retraction position Pb4, which is the first end portion of the guide groove 22, the inner end of the rear frame body 64 is positioned inward from an outer end 66 in the width direction of the stapleless binding device 9B.

More specifically, when the stapleless binding device 9B moves to the stapleless retraction position Pb4, which is at the rear end portion of the guide groove 22, the stapleless binding device 9B is positioned in the rear opening 64a to extend through the rear opening 64a.

In Fig. 8 and Figs. 9A to 9C, on the rear surface of the right portion of the rear frame body 64, a circuit board 70 is supported. More specifically, the right portion of the rear frame body 64 defines a space between the exterior covering 61 and itself to house the circuit board 70 in the space.

The fastened plate 65 includes a horizontal plate portion 65a extending rearward, and a vertical plate portion 65b extending downward from the horizontal plate portion 65a. The fastened plate 65 is supported by the rear frame body 64 at the front end portion of the horizontal plate portion 65a. The fastened plate 65 according to the first example is formed from a component different from the rear frame body 64. The fastened plate 65 is formed from a material that is different from the rear frame body 64 and that has high rigidity. The fastened plate 65 has higher rigidity than the rear frame body 64.

The vertical plate portion 65b has a fastened hole 65c serving as an example of a to-be-fastened member.

In the stapleless binding device 9B according to the first example, a fastening flange 71 is disposed on the stapleless binding device body 42B, and the fastening flange 71 has a fastening screw hole 71a. When the stapleless binding device 9B moves to the stapleless retraction position Pb4, the fastening flange 71 and the vertical plate portion 65b face each other. The fastening screw hole 71a and the fastened hole 65c are thus aligned on the same axis. Thus, a thumb screw 72 serving as an example of a fastening member is allowed to extend through the fastened hole 65c and to be fastened to the fastening screw hole 71a. The stapleless binding device body 42B is thus allowed to be screwed on and fixed to the fastening flange 71 with the thumb screw 72.

### Operation of First Example

In the finisher U4 according to the first example with the above structure, the stapling device 9A and the stapleless binding device 9B perform edge binding or corner binding while being guided by the guide groove 22.

In the existing structure described in Japanese Unexamined Patent Application Publication No. 2024-91446, the stapleless binding device is disposed outside the frame to be accessible from the outside of the medium processing apparatus. In the existing structure described in Japanese Unexamined Patent Application Publication No. 2024-105569, the stapleless binding device is disposed inside the frame, and does not extend through the frame because of no involvement of a staple refill. In each of the existing structures, the frame is disposed outside the stapleless binding device, and components including an exterior covering or an electronic circuit are disposed outside the frame. Thus, the medium processing apparatus has a large dimension in the front-rear direction.

In contrast, in the first example, the stapleless binding device 9B is allowed to extend through the rear opening 64a. Thus, the finisher U4 in which the stapleless binding device 9B and the stapling device 9A are movable on the guide groove 22 has a further reduced size than the finisher U4 in which the rear frame 63 is positioned outward from the stapleless retraction position Pb4 of the stapleless binding device 9B that is moved to the first end portion of the guide groove 22. Particularly, at the stapleless retraction position Pb4, the stapleless binding device 9B is positioned in the rear opening 64a to extend through the rear opening 64a. Thus, the stapleless binding device 9B completely protrudes rearward from the rear opening 64a, instead of being partially received in the rear opening 64a. Thus, the finisher U4 has a further smaller size than a structure in which the stapleless binding device 9B is not positioned in the rear opening 64a to extend through the rear opening 64a.

In the first example, the circuit board 70 is disposed in the space between the rear frame body 64 and the exterior covering 61. The circuit board 70 controls each portion of the finisher U4 or transmits or receives signals to or from the controller of the copying machine U. Thus, also in the finisher U4 with the smaller size than the existing device, the circuit board 70 is efficiently disposed. Thus, the space is effectively used.

In the first example, the stapleless binding device 9B is allowed to be fastened to the fastened plate 65 with the thumb screw 72. The stapleless binding device 9B generally involves a stronger binding force than the stapling device 9A. Thus, the stapleless binding device 9B usually includes a motor with a higher capacity than a motor in the stapling device 9A. Thus, the stapleless binding device 9B is usually heavier than the stapling device 9A. When the heavy stapleless binding device 9B comes into contact with surrounding components during transportation of the finisher U4 such as during shipment of products, the stapleless binding device 9B may cause breakage accidents. In contrast, in the first example, the stapleless binding device 9B is fastened to the fastened plate 65. Thus, the stapleless binding device 9B according to the first example further reduces breakage resulting from contacts of the stapleless binding device 9B with surrounding components during transportation, than in a case where the stapleless binding device 9B is not fixed. At the site where the finisher U4 is installed, the thumb screw 72 is allowed to be manually unfastened by an operator. Thus, the operator is allowed to unfasten the thumb screw 72 with a simple operation, and is capable of preparing the stapleless binding device 9B for use.

In the first example, the fastened plate 65 has higher rigidity than the rear frame body 64. Thus, the stapleless binding device 9B is less likely to come off the fastened plate 65 regardless of when, for example, receiving external vibrations during transportation. Thus, the stapleless binding device 9B is stably fixed. The fastened plate 65 with higher rigidity thus reduces breakage of the stapleless binding device 9B than in a case where the fastened plate 65 has lower rigidity.

Particularly, in the first example, the fastened plate 65 is separate from the rear frame body 64. Thus, the rigidity of simply a portion to which the stapleless binding device 9B is fastened is easily enhanced.

In the first example, the fastened plate 65 is separate from the rear frame body 64, but the present disclosure is not limited to this. For example, the fastened plate 65 may be integrated with the rear frame body 64 into a single unit, and, for example, simply a portion corresponding to the fastened plate 65 may have an increased thickness to increase the rigidity. Alternatively, a fastened plate 65 formed from a different material may be welded to the rear frame body 64 to be integrated. Alternatively, depending on the materials, the fastened plate 65 and the rear frame body 64 formed from different materials may be formed by double-color injection molding.

### Modification Examples

Although an example of the present disclosure has been described in detail above, the present disclosure is not limited to the above example, and may be modified in various manners within the scope of the gist of the present disclosure described in the scope of claims. Modification examples (H01) to (H06) of the present disclosure are described below. (H01) As the image forming apparatus according to the above example, a copying machine U has been described, but the present disclosure is not limited to this. For example, the image forming apparatus may be formed from a printer, a fax machine, or a multifunction machine having multiple or all the functions of these. Instead of an electrophotographic image forming apparatus, the present disclosure is also applicable to any image forming apparatus such as an inkjet image forming apparatus or a thermal transfer image forming apparatus.

(H02) The apparatus according to the above example employing four-color developers is described as an example of the copying machine U, but the present disclosure is not limited to this. For example, the copying machine U is also applicable to a single-color image forming apparatus or a multi-color image forming apparatus using three or less colors or five or more colors.
(H03) In the above example, the endless intermediate transfer belt B is described as an example of an image carrier, but the present disclosure is not limited to this. For example, the image carrier may be a cylindrical intermediate transfer drum, a photoconductor drum, or a photoconductor belt. Instead, the present disclosure is also applicable to a structure that includes no intermediate transfer body and that directly records an image from a photoconductor to a recording paper sheet S.

(H04) In the above example, a structure including the stapleless binding device 9B and the stapling device 9A is described as an example of a unit that performs postprocessing, but the present disclosure is not limited to this. For example, the present disclosure is also applicable to a structure including only a single binding device on the guide groove 22. The present disclosure is also applicable to a structure including three or more binding devices. Instead of a binding device, the present disclosure is also applicable to, for example, a punching unit that forms punch holes, a unit that forms folds, or a unit that forms perforations.

(H05) In the above example, the finisher U4 is disposed at the lower paper exit tray TRh, but the present disclosure is not limited to this. The finisher U4 may be a medium processing apparatus externally attached to the side portion of the copying machine U. (H06) In the above example, the binding device body 42 or 42B is rotationally movable with respect to the cart 41 or 41B, but the present disclosure is not limited to this. For example, the binding device body 42 or 42B may have any structure, for example, may be slidably moved with respect to the cart 41 or 41B or rotationally and slidably moved with respect to the cart 41 or 41B.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A medium processing apparatus, comprising:
   a stapling device that binds media with staples;
   a stapleless binding device that binds media without the staples;
   a guide member that guides the stapling device and the stapleless binding device in a width direction of the media; and
   a frame disposed at a first end portion of the guide member in the width direction, the frame being positioned inward from an outer edge of the stapleless binding device in a width direction of the stapleless binding device when the stapleless binding device is moved to the first end portion of the guide member.
(((2))) The medium processing apparatus according to (((1))),
   wherein the frame includes a transit member that allows the stapleless binding device to extend therethrough.
(((3))) The medium processing apparatus according to (((2))),
   wherein the stapleless binding device is positioned in the transit member to extend through the transit member when the stapleless binding device moves to the first end portion of the guide member.
(((4))) The medium processing apparatus according to any one of (((1))) to (((3))), comprising:
   an exterior member disposed outside the frame; and
   a circuit board disposed in a space between the frame and the exterior member to control the medium processing apparatus.
(((5))) The medium processing apparatus according to any one of (((1))) to (((4))),
   wherein the stapleless binding device is allowed to be fastened to or unfastened from the frame using a fastening member to be attachable to and removable from the frame.
(((6))) The medium processing apparatus according to (((5))),
   wherein the frame includes a to-be-fastened portion to which the stapleless binding device is fastened with the fastening member, the to-be-fastened portion having higher rigidity than other portions.
(((7))) The medium processing apparatus according to (((6))),
   wherein the to-be-fastened portion is formed from a component different from a body portion of the frame, is supported by the body portion, and is formed from a material with higher rigidity than a material of the body portion.
(((8))) The medium processing apparatus according to (((6))),
   wherein the to-be-fastened portion is thicker than the other portions.
(((9))) An image forming apparatus, comprising:
   an image recording device that records an image on a medium; and
   a medium processing apparatus according to any one of (((1))) to (((8))) that performs postprocessing on the medium to which the image is recorded by the image recording device.

In the medium processing apparatus according to (((1))), the medium processing apparatus including a stapleless binding device and a stapling device that are movable on a guide member has a smaller size than a medium processing apparatus that has a frame positioned outward from the position of a stapleless binding device that is moved to a first end portion of a guide member.

In the medium processing apparatus according to (((2))), the stapleless binding device is allowed to pass through a transit member to have its outer edges in the width direction positioned outward beyond the frame.

In the medium processing apparatus according to (((3))), the medium processing apparatus has a smaller size than a medium processing apparatus in which the stapleless binding device does not pass through a transit member when the stapleless binding device is moved to the first end portion of the guide member.

In the medium processing apparatus according to (((4))), a space is effectively usable than a structure in which a circuit board is not disposed in a space between the frame positioned inward from the stapleless binding device and the exterior member.

In the medium processing apparatus according to (((5))), the stapleless binding device sustains less damage than a stapleless binding device that is not fastened to the frame with the fastening member.

In the medium processing apparatus according to (((6))), the stapleless binding device sustains less damage than a structure in which a to-be-fastened portion has rigidity not higher than other portions.

In the medium processing apparatus according to (((7))), a portion to which the stapleless binding device is fastened has rigidity easily enhanced than in a structure in which the to-be-fastened portion is not formed from a material with higher rigidity than a body of the frame and not formed from a component different from the body of the frame.

In the medium processing apparatus according to (((8))), the to-be-fastened portion has a higher thickness than other portions to have higher rigidity.

In the image forming apparatus according to (((9))), the medium processing apparatus including a stapleless binding device and a stapling device that are movable on a guide member has a smaller size than a medium processing apparatus that has a frame positioned outward from the position of a stapleless binding device that is moved to a first end portion of a guide member.

## Claims

1. A medium processing apparatus, comprising:
a stapling device that binds media with staples;
a stapleless binding device that binds media without the staples;
a guide member that guides the stapling device and the stapleless binding device in a width direction of the media; and
a frame disposed at a first end portion of the guide member in the width direction, the frame being positioned inward from an outer edge of the stapleless binding device in a width direction of the stapleless binding device when the stapleless binding device is moved to the first end portion of the guide member.

2. The medium processing apparatus according to claim 1,
wherein the frame includes a transit member that allows the stapleless binding device to extend therethrough.

3. The medium processing apparatus according to claim 2,
wherein the stapleless binding device is positioned in the transit member to extend through the transit member when the stapleless binding device moves to the first end portion of the guide member.

4. The medium processing apparatus according to any one of claims 1 to 3, comprising:
an exterior member disposed outside the frame; and
a circuit board disposed in a space between the frame and the exterior member to control the medium processing apparatus.

5. The medium processing apparatus according to any one of claims 1 to 4,
wherein the stapleless binding device is allowed to be fastened to or unfastened from the frame using a fastening member to be attachable to and removable from the frame.

6. The medium processing apparatus according to claim 5,
wherein the frame includes a to-be-fastened portion to which the stapleless binding device is fastened with the fastening member, the to-be-fastened portion having higher rigidity than other portions.

7. The medium processing apparatus according to claim 6,
wherein the to-be-fastened portion is formed from a component different from a body portion of the frame, is supported by the body portion, and is formed from a material with higher rigidity than a material of the body portion.

8. The medium processing apparatus according to claim 6,
wherein the to-be-fastened portion is thicker than the other portions.

9. An image forming apparatus, comprising:
an image recording device that records an image on a medium; and
a medium processing apparatus according to any one of claims 1 to 8 that performs postprocessing on the medium to which the image is recorded by the image recording device.
